# EUROPÄISCHE PATENTANMELDUNG

(11) **EP 2 256 419 A2**
(43) Veröffentlichungstag der Anmeldung: **01.12.2010**
(21) Anmeldenummer: 09016085.4
(22) Anmeldetag: 29.12.2009
(51) Int. Cl.: F24D 3/14

(54) **Flächenheiz- oder/und Kühlelement**

(30) Priorität: 23.05.2009 DE 202009007360 U
(71) Anmelder: Jolly, Jürgen, 66578 Schiffweiler (DE)
(72) Erfinder: Jolly, Jürgen, 66578 Schiffweiler (DE)
(74) Vertreter: Bernhardt, Reinold

(57) **Zusammenfassung**

Die Erfindung betrifft ein Flächenheiz- oder/und Kühlelement, mit einer Trägermatte (1) und einem Paar auf der Trägermatte (1) ineinander greifend mäanderartig verlaufender Rohre (2,3). Gemäß der Erfindung laufen die in den Mäanderbögen einander zugewandten Abschnitte von wenigstens einem der Rohre (2,3) zum Bogenscheitel (7) hin aufeinander zu. Vorzugsweise laufen die Abschnitte der Rohre (2,3) nachdem sie aufeinander zugelaufen sind, dann auch wieder auseinander.

## Beschreibung

Die Erfindung betrifft ein Flächenheiz- oder/und Flächenkühlelement, mit einer Trägermatte und einem Paar auf der Trägermatte ineinander greifend mäanderartig verlaufender Rohre.

Ein vorgefertigtes Flächenheizelement solcher Art ist aus der EP 0 816 764 B2 bekannt. Auf der Trägermatte dieses bekannten Flächenheizelements verlaufen zwei Rund- oder Ovalrohre durchgehend zueinander parallel. Ebenfalls parallel zueinander verlaufen in den Mäanderbögen einander zugewandte Abschnitte von jeweils einem der Rohre. Die Rohre bilden jeweils einen an einem Vor- und Rücklauf endenden Warmwasserlauf und sind zur Durchströmung in entgegengesetzten Richtungen vorgesehen. Bei derart parallelem Rohrverlauf ergeben sich in den Möanderbögen von Rohren freie Zwischenräume, die ungleichmäßige Wärmeabgabe zur Folge haben.

Der Erfindung liegt die Aufgabe zugrunde, ein neues Flächenheiz- oder/und Kühlelement der eingangs erwähnten Art zu schaffen, durch das sich Flächenheizungen oder Flächenkühleinrichtungen mit gleichmäßigerer Wärmeabgabe bzw. Wärmeabführung ergeben.

Das diese Aufgabe lösende Flächenheiz- oder/und Kühlelement nach der Erfindung ist **dadurch gekennzeichnet, dass** die in den Mäanderbögen einander zugewandten Abschnitte von wenigstens einem der Rohre zum Bogenscheitel hin aufeinander zulaufen.

Vorteilhaft lassen sich durch diese Erfindungslösung von Rohrbelegungen freie Zwischenräume in den Mäanderbögen reduzieren.

In einer besonders bevorzugten Ausführungsform der Erfindung laufen die aufeinander zulaufenden Rohrabschnitte wieder auseinander, wodurch sich eine noch gleichmäßigere Belegung des Bodens mit Heizrohren bzw. Kühlrohren ergibt.

Zweckmäßig kommen sich die Rohrabschnitte auf einer Mittelachse der Rohranordnung am nächsten, wobei die Rohrabschnitte an der Stelle, an der sie sich am nächsten kommen, vorzugsweise unmittelbar nebeneinander verlaufen bzw. keinen oder nur geringen Abstand zueinander haben.

Vorzugsweise verlaufen die beiden Rohre darüber hinaus zumindest an den Scheiteln der Möanderbögen unmittelbar nebeneinander, wobei sich ein solcher Verlauf über einen mehr oder weniger großen Bereich um den Scheitelpunkt herum erstrecken kann.

Vorzugsweise ist die Trägermatte bahnförmig ausgebildet und das Paar von Rohren verläuft mäanderartig in Bahnlängsrichfiung.

In weiterer vorteilhafter Ausgestaltung der Erfindung ist über dem auf der Trägermatte verlegten Rohrpaar eine weitere Matte angeordnet, die zur gleichmäßigen Wärmeabgabe beiträgt. Die weitere Matte kann z.B. aus Kupfer oder/und Aluminium bestehen.

Zweckmäßig sind die Trägermatte, das Rohrpaar und die weitere Matte miteinander zu einer ausrollbaren Bahn verbunden.

Sowohl die Trägermatte als auch die weitere Matte sind zweckmäßig durch eine Gewebematte, insbesondere Gittergewebematte, gebildet. Das Heizelement lässt sich dann stabil in eine Estrich- oder Fliesenkleberschicht einbetten, indem die Schicht durch die Gitterstruktur der Matten nicht getrennt wird.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein Ausführungsbeispiel für ein erfindungsgemäßes Flächenheiz- oder/und Kühlelement, und
- Fig. 2 und 3: weitere Ausführungsbeispiel für erfindungsgemäße Rohranordnungen eines Flächenheiz- oder/und Kühlelements.

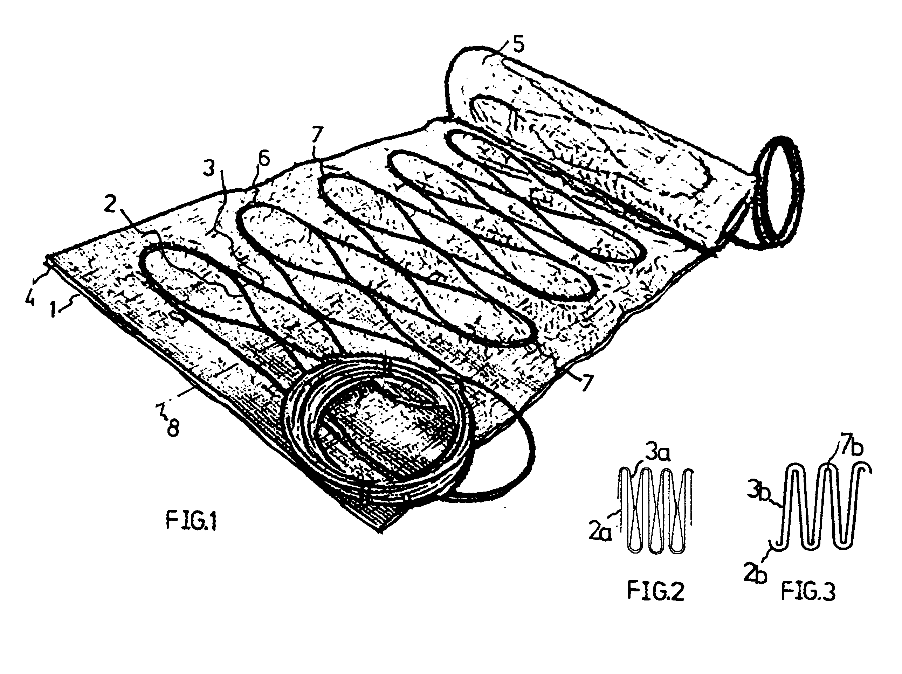

Ein in Fig. 1 gezeigtes vorgefertigtes Element zur Installation, insbesondere nachträglichen Installation, einer Fußbodenheizung umfasst eine bahnförmige Trägermatte 1, auf der ein Paar flexibler Rohre 2 und 3 in Bahnlängsrichtung mäanderartig ineinander greifend verlegt ist. Über dem Paar runder oder ovaler Rohre 2,3 ist eine weitere Matte 4 angeordnet. Die Trägermatte 1, die Rohre 2 und 3 sowie die weitere Matte 4 sind miteinander zu einer ausrollbaren Bahn 5 verbunden.

In dem gezeigten Ausführungsbeispiel ist die Trägermatte 1 durch ein Gittergewebe aus Kunststoff gebildet. Bei den flexiblen für eine Fußbodenheizung geeigneten Rohren 2 und 3 handelt es sich in dem betreffenden Ausführungsbeispiel um Polyethylenrohre mit einem Durchmesser, der bis zu 12 mm betragen kann. Die weitere Matte 4 besteht aus einem metallischen Gittergewebe, z.B. Kupfer- oder Aluminiumgewebe. Die Rohre 2 und 3 sind über Verbindungsstücke 6 aus Kunststoff untereinander und gleichzeitig mit der Trägermatte 1 und der weiteren Matte 4 verbunden. Die Verbindung der Rohre mit der Trägermatte kann auch auf andere Weise erfolgen, z.B. durch Aufkleben, Aufnöhen, Auftackern oder Aufsticken.

Wie Fig. 1 erkennen lässt, laufen die in den einzelnen Mäanderbögen einander zugewandten Abschnitte der Rohre 2 und 3 in Richtung zum jeweiligen Scheitel 7 der Mäanderbögen zunächst zusammen und dann wieder auseinander. An Stellen, die in der Mitte des Elements auf einer Symmetrieachse 8 liegen, kommen sich die Rohrabschnitte jeweils am nächsten und sind an diesen Stellen durch eines der Verbindungsstücke 6 miteinander und mit den Matten 1,4 verbunden.

Das in Fig. 1 gezeigte Element lässt sich durch Schnitte quer zur Bahn in Bahnabschnitte gewünschter Länge trennen, wobei die Rohre 2 und 3 an den Enden der Bahnabschnitte unzertrennt von Bahnabschnitt zu Bahnabschnitt übergehen. Eine rechteckige Bodenfläche kann auf diese Weise vollständig mit hin- und herlaufenden Bahnabschnitten belegt werden. Die Rohre 2 und 3 lassen sich unter Bildung getrennter Warmwasserläufe jedes für sich an einen Vor- und Rücklauf anschließen, wobei die Durchströmung mit dem Heizmedium entweder gleichsinnig oder in entgegengesetzten Richtungen erfolgt.

Da sowohl die Trägermatte 1 als auch die weitere Matte 4 gitterartig ausgebildet sind, kann das Heizelement ohne Weiteres in eine die Matten 1,4 durchdringende Estrich- oder Fliesenkleberschicht eingebettet werden.

Indem die in den einzelnen Mäanderbögen einander zugewandten Abschnitte der Rohre 2 und 3 in Richtung des Bogenscheitels 7 zunächst aufeinander zu und wieder auseinander laufen, wird eine gleichmäßige Belegung des Bodens mit Rohren und damit eine gleichmäßige Wärmeabgabe erreicht. Zur gleichmäßigen Wärmeabgabe trägt auch die weitere, aus einem Metall bestehende Matte 4 bei. Schließlich ergibt sich aus dem Verlauf der Rohre 2 und 3 auch eine insgesamt größere Rohrlänge und damit letztlich größere Belegungsdichte des Bodens mit Heizrohren.

Fig. 2 zeigt eine von dem vorangehenden Ausführungsbeispiel abweichende Anordnung von Rohren 2a und 3a. Nur die in jedem zweiten Mäanderbogen einander gegenüberliegenden Abschnitte des Rohres 3a laufen zunächst aufeinander zu und dann wieder auseinander. Dafür liegen die einander zugewandten und zueinander parallel verlaufenden Rohrabschnitte des Rohres 2a in den anderen Möanderbögen enger beieinander.

Gemäß Fig. 3 verlaufen Rohre 2b und 3b durchgehend parallel, wobei in den Mäanderbögen einander zugewandte Abschnitte von jeweils einem der Rohre 2b,3b zum Bogenscheitel 7b in aufeinander zulaufen.

Auch durch diese Rohranordnungen wird eine gleichmäßige Belegung des Bodens mit Heizrohren und dadurch verbesserte Wärmeverteilung erreicht.

## Patentansprüche

1. Flächenheiz- oder/und Kühlelement, mit einer Trägermatte (1) und einem Paar auf der Trägermatte (1) ineinander greifend mäanderartig verlaufender Rohre (2,3),
**dadurch gekennzeichnet,**
**dass** die in den Mäanderbögen einander zugewandten Abschnitte von wenigstens einem der Rohre (2,3) zum Bogenscheitel (7) hin aufeinander zulaufen.

2. Element nach Anspruch 1,
**dadurch gekennzeichnet,**
**dass** die aufeinander zulaufenden Rohrabschnitte wieder auseinander laufen.

3. Element nach Anspruch 2,
**dadurch gekennzeichnet,**
**dass** sich die Abschnitte der Rohre (2,3) auf einer Mittelachse (8) der Rohranordnung am nächsten kommen.

4. Element nach Anspruch 2 oder 3,
**dadurch gekennzeichnet,**
**dass** die Abschnitte der Rohre (2,3) an der Stelle, an der sie sich am nächsten kommen, unmittelbar nebeneinander verlaufen.

5. Element nach einem der Ansprüche 1 bis 4,
**dadurch gekennzeichnet,**
**dass** die beiden Rohre (2,3) zumindest an den Scheiteln (7) der Mäanderbögen unmittelbar nebeneinander verlaufen.

6. Element nach einem der Ansprüche 1 bis 5,
**dadurch gekennzeichnet,**
**dass** die Trägermatte (1) bahnförmig ausgebildet und das Paar von Rohren (2,3) mäanderartig in Bahnlängsrichtung verlegt ist.

7. Element nach einem der Ansprüche 1 bis 6,
**dadurch gekennzeichnet,**
**dass** über dem auf der Trägermatte (1) verlegten Paar von Rohren (2,3) eine weitere Matte (4) angeordnet ist.

8. Element nach Anspruch 7,
**dadurch gekennzeichnet,**
**dass** die Trägermatte (1), das Paar von Rohren (2,3) und die weitere Matte (4) miteinander zu einer ausrollbaren Bahn (6) verbunden sind.

9. Element nach einem der Ansprüche 1 bis 8,
**dadurch gekennzeichnet,**
**dass** es sich bei der Trägermatte (1) und der weiteren Matte (4) um eine Gewebematte, insbesondere Gittergewebematte, handelt.

10. Element nach einem der Ansprüche 7 bis 9,
**dadurch gekennzeichnet,**
**dass** die weitere Matte (4) aus Kupfer oder/und Aluminium besteht.
